# EUROPEAN PATENT APPLICATION

(11) **EP 4 597 375 A1**
(43) Date of publication of application: **06.08.2025**
(21) Application number: 24154911.2
(22) Date of filing: 31.01.2024
(51) Int. Cl.: G06N 5/022, G06N 3/042, G06N 3/0475, G06N 3/092

(54) **METHOD FOR GENERATING A BEHAVIOUR TREE FOR CONTROLLING A ROBOT DEVICE**

(71) Applicant: Robert Bosch GmbH, 70442 Stuttgart (DE)
(72) Inventor: Mehdi, Anees Ul, 73760 Ostfildern (DE); Schmid, Stefan, 71332 Waiblingen (DE); Lange, Ralph, 71277 Rutesheim (DE); Luettin, Juergen, 71272 Renningen (DE); Van Duijkeren, Niels, 70806 Kornwestheim (DE); Halilaj, Lavdim, 71229 Leonberg (DE)

(57) **Abstract**

According to various embodiments, a method for generating a behaviour tree for controlling a robot device is provided, comprising combining a plurality of predetermined behaviour trees and background knowledge into a behaviour tree knowledge graph, representing the behaviour tree knowledge graph in a latent space, extracting, from a prompt describing a desired behaviour of the robot device, a prompt representation graph, supplementing the prompt representation graph according to relations specified by the behaviour tree knowledge graph, selecting a sub graphs of the behaviour tree knowledge graph depending on a similarity to the supplemented prompt representation graph and generating the behaviour tree for controlling the robot device by adjusting the selected sub graph according to knowledge from the prompt and the behaviour tree knowledge graph.

## Description

The present disclosure relates to devices and methods for generating a behaviour tree for controlling a robot device.

A robot device may be controlled using a behaviour tree which indicates actions the robot should take in various situations and constraints the robot device should respect. Behaviour trees in robotics aim to provide a structured, modular framework for defining and executing autonomous behaviours. They break down complex tasks into manageable modules, allowing for easier design, modification, and reusability. This promotes a clear decision-making logic and facilitates efficient validation and testing of robot behaviours, contributing to their effective operation in diverse environments.

A behaviour tree may be generated manually by an expert. This, however, comes with several drawbacks, such as that
- it is time-consuming: creating behaviour trees manually can be a time-intensive process, especially for complex tasks or scenarios. It requires careful planning, design, and implementation, which can be resource intensive.
- it is dependent on expertise: effective manual behaviour tree generation requires a deep understanding of the domain and specific system requirements. This expertise may not always be readily available, leading to potential design shortcomings.
- it is prone to human error: since behaviour trees are created by humans, there is a higher likelihood of making mistakes in the design or implementation. These errors can lead to unexpected or incorrect behaviours in the system.
- it lacks flexibility: once a behaviour tree is manually designed and implemented, it may be less flexible in adapting to unforeseen or dynamic situations. Making significant changes may require a re-evaluation of the entire design.

Therefore, efficient approaches for automatic generation of behaviour trees for robot device control are desirable.

According to various embodiments, a method for generating a behaviour tree for controlling a robot device is provided, comprising combining a plurality of predetermined behaviour trees and background knowledge into a behaviour tree knowledge graph, representing the behaviour tree knowledge graph in a latent space by a knowledge graph embedding method (KGE) in a form of a plurality of multiple clusters of latent space elements, wherein each cluster represents a sub-graph of the behaviour tree knowledge graph, extracting, from a prompt describing a desired behaviour of the robot device, a prompt representation graph representing terms in the prompt as nodes and relations between the terms indicated in the prompt as edges, supplementing the prompt representation graph with one or more nodes and/or one or more edges according to relations, specified by the behaviour tree knowledge graph, between multiple terms indicated in the prompt and/or one or more terms indicated in the prompt and other terms represented in the behaviour tree knowledge graph, representing the supplemented prompt representation graph as an additional cluster in the latent space by the knowledge graph embedding method, determining similarities of the additional cluster with the clusters of the plurality of clusters, selecting one of the sub graphs of the behaviour tree knowledge graph depending on the similarity of the cluster representing the subgraph with the additional cluster and generating the behaviour tree for controlling the robot device by adjusting the selected sub graph according to knowledge from the prompt and the behaviour tree knowledge graph.

The method described above allows automatic generation of a behaviour tree which is suitable for a given task with low burden for the user since the desired behaviour can be specified by a text prompt which is then enriched by domain- and expert- knowledge included in the behaviour tree knowledge graph.

An automatic generation of a behaviour tree (as provided by the method described above) allows streamlining the human-robot interaction process. It thus allows humans to easily extend or tailor the behaviour of the robot for new or specific scenarios.

Leveraging domain knowledge by making use of the behaviour tree knowledge graph in the generation of the behaviour tree, i.e. domain-specific knowledge represented in a knowledge graph allows
- making use of domain expertise: domain-specific knowledge graphs provide detailed information about entities, relationships, and concepts specific to the domain. This allows having a deeper understanding of the domain and generating more accurate and contextually relevant behaviour trees.
- improved contextual understanding: integrating domain-specific information enables a better understanding of the context in which information is presented. This is particularly important for tasks that require nuanced understanding of domain-specific concepts and terminology.
- enhanced fact verification and information retrieval: via domain-specific knowledge graphs it is possible to verify facts and retrieve accurate information related to the specific domain. This is crucial for applications where accuracy and reliability of information are paramount.
- tailored response generation: The method described above can generate responses i.e. behaviour trees that are tailored to the textual input. This is particularly important in domains like robot manipulation where precision is key.
- reduced ambiguity: domain-specific knowledge graphs can help disambiguate terms or concepts that may have multiple meanings in different contexts. This reduces the chances of generating ambiguous or incorrect behaviour trees.
- better integration with existing systems: structured information in the form of knowledge graphs can seamlessly be integrated into existing systems and workflows within that domain, providing enhanced capabilities and efficiency.

In the following, various examples are given.

Example 1 is a method for generating a behaviour tree for controlling a robot device as described above.

Example 2 is the method of example 1, comprising extracting the prompt representation graph by means of a machine learning model configured to operate on natural language text (i.e. a natural language processing model, e.g. a large language model (LLM)) which is supplied with the prompt as input.

A machine learning model like an LLM allows effective extraction of semantics and thus of terms and their relations. Moreover, it may be trained as a part of training the behaviour tree generation process in an end-to-end manner (e.g. users give feedback to behaviour trees generated from prompts and the generation process are adjusted (trained) accordingly, including in particular the machine learning model and possibly also the KGE).

Example 3 is the method of example 1 or 2, wherein selecting the sub graphs comprises selecting the sub-graph of the behaviour tree knowledge graph whose cluster as which it is represented has the highest similarity with the additional cluster.

This ensures that the best-fitting basis used for the behaviour tree generation. However, other criteria may also be taken into account in the selection.

Example 4 is the method of any one of example 1 to 3, comprising generating the prompt such that the prompt representation graph comprises one or more nodes and/or one or more edges for terms and/or relations not included in the behaviour tree knowledge graph.

This means that a behaviour can be specified beyond what is included in the behaviour tree knowledge graph.

Example 5 is the method of any one of examples 1 to 4, further comprising combining the generated behaviour tree with the behaviour tree knowledge graph.

Thus, the behaviour tree knowledge graph grows in terms of behaviour that it specifies and knowledge in course of generation of "new" behaviour trees and thus the generation process improves over time. For example, when a behaviour tree for a prompt specifying a certain sub-behaviour has been generated (and combined with the behaviour tree knowledge graph) it may not be necessary to specify this sub-behaviour for a following prompt for a generation of a following behaviour tree.

Example 6 is a method for controlling a robot device, comprising describing a desired behaviour of the robot device in a text prompt, generating a behaviour tree for controlling a robot device according to any one of examples 1 to 5 and controlling the robot device according to the generated behaviour tree.

Example 7 is a data processing device (in particular a robot device controller), configured to perform a method of any one of examples 1 to 6.

Example 8 is a computer program comprising instructions which, when executed by a computer, makes the computer perform a method according to any one of examples 1 to 6.

Example 9 is a computer-readable medium comprising instructions which, when executed by a computer, makes the computer perform a method according to any one of examples 1 to 6.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a vehicle.
Figure 2 illustrates the generation of a "new" behaviour tree according to an embodiment.
Figure 3 shows a flow diagram illustrating a method for generating a behaviour tree for controlling a robot device according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

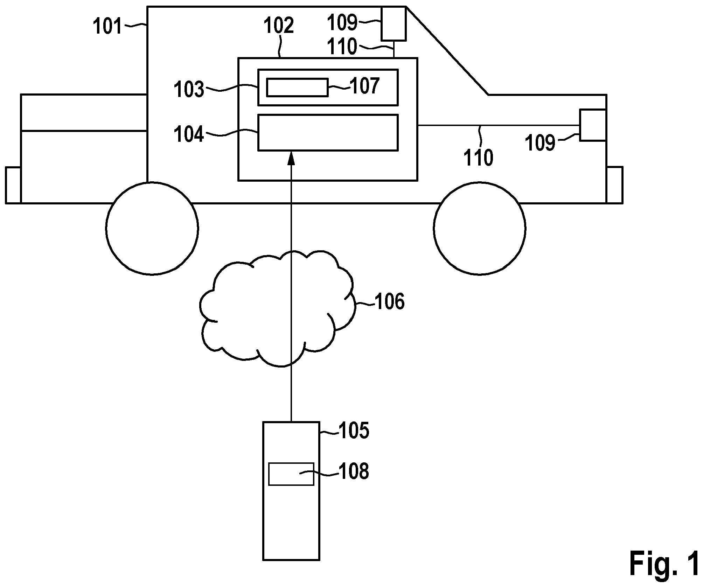

Figure 1 shows a vehicle 101.

In the example of Figure 1, a vehicle 101, for example a car or truck, is provided with a vehicle control device (also referred to as an electronic control unit, e.g. a control unit, e.g. an electronic control unit (ECU)) 102.

The vehicle control device 102 has data processing components, e.g. a processor (e.g. a CPU (central processing unit)) 103 and a memory 104 for storing control software 107, according to which the vehicle control device 102 operates, and data processed by the processor 103. The processor 103 executes the control software 107.

For example, the stored control software (computer program) has instructions which, when executed by the processor, cause the processor 103 to perform driver assistance functions (i.e. the function of an ADAS (Advanced Driver Assistance System)) or even autonomously control the vehicle (AD (Autonomous Driving)).

The control software 107 is transferred, for example, from a computer system 105 to the vehicle 101, e.g. via a network 106 (or also with the aid of a storage medium such as a memory card). This can also be done during operation (or at least when the vehicle 101 is with the user), as the control software 107 is updated to new versions over time, for example.

The control software 107 determines control actions for the vehicle (such as steering actions, braking actions, etc.) from input data that is available to it and that contains information about the environment or from which it derives information about the environment (such as by detecting other road users, e.g. other vehicles). These are, for example, sensor data from one or more sensor devices 109, such as from a camera of the vehicle 101, a RADAR sensor, a LiDAR sensor, an ultrasonic sensor, etc., which are connected to the vehicle control device 102 via a communication system 110 (e.g. a vehicle bus system such as CAN (Controller Area Network)).

The control software 107 may, for example, comprise a behaviour tree (e.g. generated by the computer system 105).

According to various embodiments, an approach to automatically generate a behaviour tree (BT) for robot device control (e.g. vehicle control or for controlling a robot (e.g. robot arm) to execute a robot manipulation task) in possibly uncertain and changing environments is provided. The approach can for example be integrated within a task and motion planning framework that computes a sequence of actions and associated motions to be performed by the respective robot device (e.g. to perform the manipulation task). For example, the generated BT may be automatically written into one or more XML files that describe the BT which is then used as a basis for control of the robot device.

For this, according to various embodiments, behaviour trees for robot control (e.g. robotic manipulation) are represented along with domain and expert knowledge to offer an overarching representation of relevant knowledge and enable generation of new behaviour trees in a (semi-)automated fashion.

According to various embodiments, the approach initially represents all relevant knowledge such as information about robot sensors, configuration, behaviours, etc. in a structured format a.k.a. a behaviour tree knowledge graph. This enables learning of and understanding relationships, hierarchies, and contextual information about entities appearing in a control situation (or scene). A user can describe a new behaviour for the respective robot device in natural language form. This description is taken as input for generation of a behaviour tree based on the similarity of the given input with the description of previous (i.e. predetermined) behaviour trees.

Behaviour trees can become complex and difficult to manage for large or intricate systems, potentially leading to design challenges and reduced maintainability. Additionally, they may struggle with handling continuous or dynamic environments where behaviours need to be continuously adapted, requiring additional mechanisms for real-time responsiveness.

With a behaviour tree knowledge graph that follows an underlying ontology, high level information of the domain knowledge can be encoded by conceptualizing entities and their relationships as well as sensory information and configuration. According to various embodiments, this knowledge is then used to automate the generation of new behaviour trees on demand that are compatible with predefined constraints and plausible behaviours. Thus, robots are empowered with understanding and able to respond to human commands or queries related to manipulation tasks. This enhances human-robot interaction and collaboration.

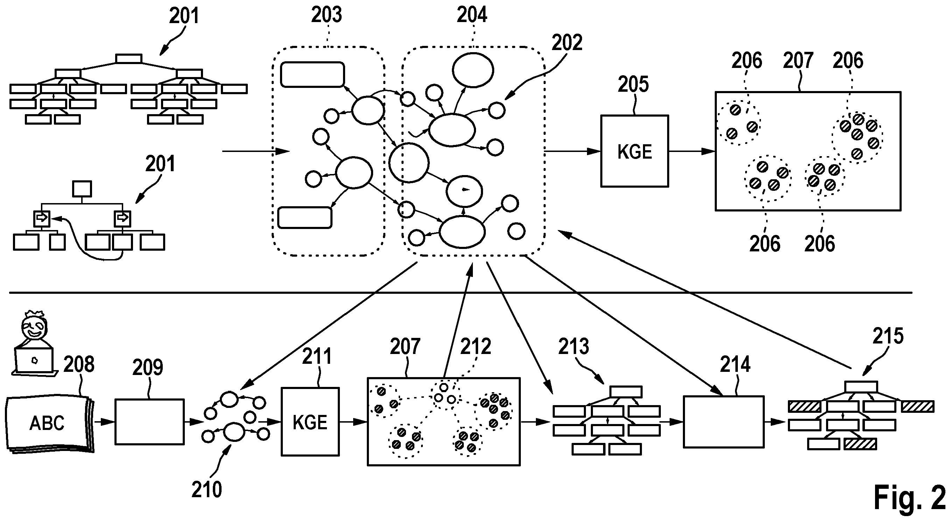

Figure 2 illustrates the generation of a ("new") behaviour tree 215 according to an embodiment.

In a first preparation step, available behaviour trees (BT) 201, e.g. manually generated earlier by experts (therefore also referred to as "predetermined" BTs) are represented all in form of a structured graph, namely a generic Behaviour Tree Knowledge Graph (BTKG) 202 containing domain knowledge 203 and background knowledge 204. The BTKG 202 is denoted as G = [V, E] where V denotes vertices (e.g. states or actions, like gripping, and domain entities) and E represents edges (e.g. to represent the tree structure and relations between the vertices and their environment). In addition to the information from the predetermined BTs 201, the BTKG 202 contains background and context knowledge regarding other relevant agents, behaviour and sensors as well as their hierarchical and inter-relationships. Each of the predetermined BTs 201 is included in a form of subgraph G' = [V', E'], where V'⊆ V and E'⊆ E in the BTKG 202.

In a second preparation step, feature and relation extraction from these sub-graphs is performed to characterize their properties. These features include node labels (e.g. behaviour tree name, validity, etc.), edge weights (to represent the strength of the connection between two nodes if relevant), or any other relevant information. A knowledge graph embedding (KGE) method 205 is applied to transform this information into a lower-dimensional space, i.e. to an embedding h_{BTKG} in a latent space 207, creating compact and informative embeddings for each subgraph, e.g. in the form of, for each subgraph, a cluster 206, denoted as h_{G'}, of node embeddings 207.

These two preparation steps serve to set up the automatic generation of a (new) behaviour tree 215.

The application of this automatic generation of a behaviour tree for example includes the following:
1. A user provides a request for creating a new behaviour tree in the form of natural language prompt 208, e.g. "Run more cautiously when there are many people around." a. The given prompt 208 is validated to check the user's intention, as well as whether it contains any contradictions or if there is incomplete information.
2. A terminology extraction 209 is applied to the prompt 208 using an NLP (natural language processing) technique, e.g. a LLM (large language model). Further, the extracted terms are enriched with domain knowledge from BTKG 202, thus forming a graph 210, denoted as prompt representation graph G" = [V", E"], with vertices V" and edges E", where V" \ V # ⌀ and E" \ E ≠ ø, meaning that there may be concepts and/or relations which are new and not present in the original BTKG 202. For example, from the exemplary prompt 208 given above, the following concepts (or terms) are extracted: "Run, Cautiously, People". In addition, more nuanced concepts, like: "there are many people around", "driving cautiously" are extracted as well. The enrichment is performed by matching the extracted concepts (terms or expressions) to the BTKG 202. For instance, in BTKG 202 there exists the definition of "People is subclass of Person", plus the relation to the "Behaviour" concept - of how the robot should deal with such kind of entities. Moreover, complex expressions like "driving cautiously" may as well be defined in the BTKG 202. This information is fetched from the BTKG 202 and inserted into the subgraph G". Also, for a concept (in form of a term or expression of terms), e.g. "drive" in the prompt 208 the BTKG 202 may specify a similarity relation with another concept, e.g. "run", which is also then added to G" (e.g. as additional node for "run" and an edge between the nodes for "run" and "drive" and a specification (e.g. edge node) that the edge specifies a similarity relation). This kind of enrichment is done for each concept in the prompt 208 and thus additional relevant information is retrieved from the BTKG 202. However, there might be concepts mentioned in the prompt 208 for which there is no match in the BTKG 202. These are kept in consideration (to use them for the similarity calculation (see the following step) simply based on the textual descriptions of the predetermined BTs 201 in the BTKG 202, i.e. any G'iwith G", without considering the graph structure).
3. Then, a knowledge graph embedding method 211 (which is the same or at least similar to the knowledge graph embedding method 205 to give corresponding/comparable results) is applied to the prompt representation graph 210, i.e. to G", to transform to a cluster 212 of node embeddings in the latent space 207, denoted as h_{G"}. This graph embedding h_{G"} is then compared with the embeddings h_{G'} of the predetermined BTs 201 in the embedding space h_{BTKG}. This comparison is performed based on a similarity measure, e.g. cosine similarity, where the pair-wise distances of the vectors of h_{G"} with the vectors of h_{G'} in h_{BTKC} is determined. For example, the distance between the graph embedding h_{G'}, and the graph embedding h_{G'} for one of the predetermined BTs 201 is the minimum distance between a vector of h_{G'}, and a vector of h_{G'}, i.e. the distance between a pair of vectors of h_{G'}, and h_{G'} which give the minimum distance among all such pairs. A similarity score of G" and the respective predetermined BT 201 is then for example the inverse of this minimum distance.
4. As a result, a list L is produced containing the top N elements (predetermined BTs 201 with nearest embeddings h_{G'} to h_{G"}) ranked according to their similarity scores. (Please note again that strictly speaking, h_{G'} is the embedding of the subgraph with which the respective predetermined BT 201 is included in the BTKG 202 rather than of the predetermined BT 201 itself. For simplicity, it is assumed that these are the same but when the BTKG 202 is formed there may be adaptations, e.g. to fit the predetermined BTs 201 together.
5. One of the predetermined BTs 201 (or, to be exact, its corresponding subgraph in the BTKG 202) of the list is then selected, e.g. the one with the highest similarity score. From this selected behaviour tree 213, the new BT 215 is generated in a BT generation step 214. During the BT Generation step 214, new concepts (behaviour, agents) which are present in the prompt 208 are used to replace the old concepts in the selected BT 214.
6. The new BT 215 may then be validated according to the general predefined constraints and plausible behaviours.
7. Optionally, the BTKG 202 can be updated by including the new BT 215.

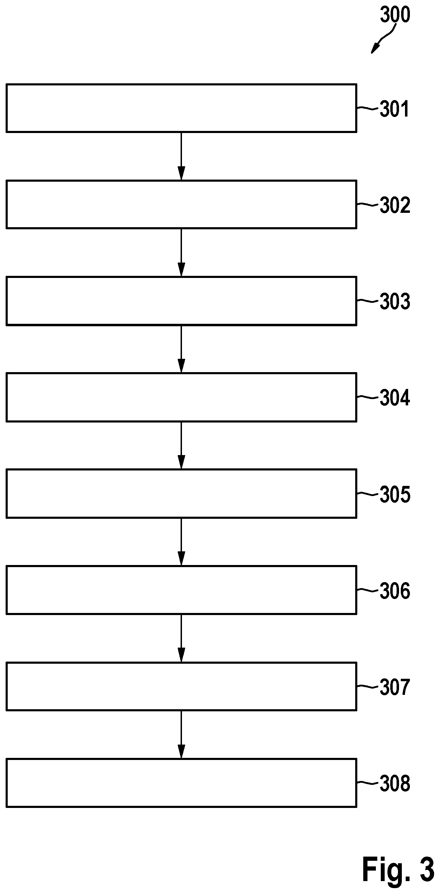

In summary, according to various embodiments, a method is provided as illustrated in figure 3.

Figure 3 shows a flow diagram 300 illustrating a method for generating a behaviour tree for controlling a robot device according to an embodiment.

In 301, a plurality of predetermined behaviour trees and background knowledge are combined into a behaviour tree knowledge graph (i.e. an "aggregate" (behaviour tree knowledge) graph).

In 302, the behaviour tree knowledge graph is represented in a latent space by a knowledge graph embedding method (KGE, also referred to as knowledge representation learning (KRL)) in a form of a plurality of multiple clusters of latent space elements (i.e. vectors in the latent space, wherein each vector is for example an embedding of a respective node of the behaviour tree knowledge graph), wherein each cluster represents a sub-graph (which e.g. corresponds to (or is a part of) a respective one of the predetermined behaviour trees) of the behaviour tree knowledge graph.

In 303, from a (e.g. user) prompt (i.e. text string) describing a desired behaviour of the robot device, a prompt representation graph is extracted representing terms in the prompt as nodes and relations between the terms indicated in the prompt as edges. Terms (which may also form expressions) may describe entities ("person", "children",...), actions ("drive", "stop", ....) and attributes and/or constraints ("cautiously", "slowly",...). Edges specify relations between the terms represented by the connected nodes (e.g. equivalence, orders of actions, constraints to be applied ...). It should be noted that a graph node may correspond to one term but possibly also to a multiple terms (i.e. an expression of multiple terms). A relation between a node representing a relation to another node may be seen as representing a relation of the terms of the expression with the one or more terms (e.g. expression) represented by the other node.

In 304, the prompt representation graph is supplemented with one or more nodes and/or one or more edges according to relations, specified by the behaviour tree knowledge graph, between multiple terms indicated in the prompt and/or one or more terms indicated in the prompt and other terms represented (e.g. as nodes) in the behaviour tree knowledge graph (e.g. the prompt may specify "person" and the behaviour tree knowledge graph (BTKG) may specify that "person" and "people" are equivalent, so a "people" node may be added to the prompt representation graph with an edge to the "person" node indicating equivalence. Another example is that the prompt specifies both "person" and "people" and the BTKG specifies that these are equivalent so an edge is added between the corresponding nodes in the prompt representation graph).

In 305, the supplemented prompt representation graph is represented as an additional cluster (i.e. an additional a "supplemented graph cluster") in the latent space by the knowledge graph embedding method.

In 306, similarities of the additional cluster with the clusters of the plurality of clusters are determined.

In 307, one of the sub graphs of the behaviour tree knowledge graph is selected depending on the similarity of the cluster representing the subgraph with the additional cluster.

In 308, the behaviour tree for controlling the robot device is generated by adjusting (i.e. modifying) the selected sub graph according to knowledge from the prompt and the behaviour tree knowledge graph. For example, this includes looking into the selected sub graph, see what is missing (e.g. which terms are missing) with respect to the prompt and then fill in missing information from the behaviour tree knowledge graph or replace information in the sub-graph by information from the prompt or behaviour tree knowledge graph (or also delete nodes). For example, the prompt says: "drive more cautiously when children close by", the selected sub-graph specifies the behaviour "drive more cautiously when persons nearby" and the BTKG specifies that for children a higher distance than for persons in general should be maintained. Then a safety distance included in the sub-graph (for persons) is replaced by the safety distance included in the BTKG.

The method may further comprise validating the generated behaviour tree validated against one or more pre-defined constraints in order to be sure that it is consistent and does violate any rule. For example, it is only used for robot control if it passes validation. Otherwise, it is for example modified or re-generated.

The approach of figure 3 can be used to determine a behaviour tree which may then be used compute a control signal for controlling a technical system, like e.g. a computer-controlled machine, like a robot, a vehicle, a domestic appliance, a power tool, a manufacturing machine, a personal assistant or an access control system. So, according to various embodiments, a behaviour tree for controlling the technical system is determined from a text prompt and then the technical system may be operated accordingly.

The generation of a suitable behaviour tree based on a user input (prompt) allows lowering the barriers for manual programming of new behaviours. In the behaviour tree knowledge graph, information such as relationships, hierarchies, and axioms are represented in a well-defined structure. Leveraging this structures can save time and effort in the creation of behaviour trees in an automatic manner.

Various embodiments may receive and use image data (i.e. digital images) from various visual sensors (cameras) such as video, radar, LiDAR, ultrasonic, thermal imaging, motion, sonar etc., as a basis for controlling the technical system in accordance with the generated behaviour tree (e.g. by determining a situation the technical system is in and/or a state that it has and deriving an action to be taken which the behaviour tree specifies for this situation and/or state). The sensor data may be one-dimensional or multi-dimensional data as they for example arise in a production process.

At the time of the generation of the behaviour tree, only neural network generated embeddings are needed which can be seen to encode high level semantic concepts.

It should be noted that the method may at least partially be carried out by means of a machine learning model (e.g. for the extraction of the prompt representation graph) which may be trained, e.g. using reinforcement learning (e.g. by giving feedback from a user about generated behaviour trees).

The method of Figure 3 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analogue circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for generating a behaviour tree (215) for controlling a robot device (101), comprising:
combining (301) a plurality of predetermined behaviour trees (201) and
background knowledge into a behaviour tree knowledge graph (202);
representing (302) the behaviour tree knowledge graph (202) in a latent space (207) by a knowledge graph embedding method (205, 211) in a form of a plurality of multiple clusters (206) of latent space elements, wherein
each cluster (206) represents a sub-graph of the behaviour tree knowledge graph (202);
extracting (303), from a prompt (208) describing a desired behaviour of the robot device (101), a prompt representation graph (210) representing terms in the prompt (208) as nodes and relations between the terms indicated in the prompt (208) as edges;
supplementing (304) the prompt representation graph (210) with one or more nodes and/or one or more edges according to relations, specified by the behaviour tree knowledge graph (202), between multiple terms indicated in the prompt (208) and/or one or more terms indicated in the prompt (208) and
other terms represented in the behaviour tree knowledge graph (202);
representing (305) the supplemented prompt representation graph (210) as an additional cluster (212) in the latent space (207) by the knowledge graph embedding method (205, 211);
determining (306) similarities of the additional cluster (212) with the clusters (206) of the plurality of clusters;
selecting (307) one of the sub graphs of the behaviour tree knowledge graph (202) depending on the similarity of the cluster (206) representing the sub-graph with the additional cluster (212); and
generating (308) the behaviour tree (215) for controlling the robot device (101) by adjusting the selected sub graph according to knowledge from the prompt (208) and the behaviour tree knowledge graph (202).

2. The method of claim 1, comprising extracting the prompt representation graph (210) by means of a machine learning model configured to operate on natural language text (i.e. a natural language processing model, e.g. a large language model (LLM)) which is supplied with the prompt (208) as input.

3. The method of claim 1 or 2, wherein selecting the sub graphs comprises selecting the sub-graph of the behaviour tree knowledge graph (202) whose cluster (206) as which it is represented has the highest similarity with the additional cluster (212).

4. The method of any one of claims 1 to 3, comprising generating the prompt (208) such that the prompt representation graph (210) comprises one or more nodes and/or one or more edges for terms and/or relations not included in the behaviour tree knowledge graph (202).

5. The method of any one of claims 1 to 4, further comprising combining the generated behaviour tree with the behaviour tree knowledge graph (202).

6. A method for controlling a robot device (101), comprising:
describing a desired behaviour of the robot device (101) in a text prompt (208);
generating a behaviour tree (215) for controlling a robot device (101) according to any one of claims 1 to 5; and
controlling the robot device (101) according to the generated behaviour tree.

7. A data processing device (105), configured to perform a method of any one of claims 1 to 6.

8. A computer program comprising instructions which, when executed by a computer, makes the computer perform a method according to any one of claims 1 to 6.

9. A computer-readable medium comprising instructions which, when executed by a computer, makes the computer perform a method according to any one of claims 1 to 6.
